(19) Europäisches Patentamt
European Patent Office
Office européen des brevets

(11) EP 4 327 658 A1

(12) **EUROPEAN PATENT APPLICATION**
published in accordance with Art. 153(4) EPC

(43) Date of publication:
**28.02.2024 Bulletin 2024/09**

(21) Application number: **22791691.3**

(22) Date of filing: **18.04.2022**

(51) International Patent Classification (IPC):
***A01N 47/02*** *(2006.01)* ***A01M 1/20*** *(2006.01)*
***A01N 25/06*** *(2006.01)* ***A01P 7/04*** *(2006.01)*

(52) Cooperative Patent Classification (CPC):
**A01M 1/20; A01N 25/06; A01N 47/02; A01P 7/04**

(86) International application number:
**PCT/JP2022/017996**

(87) International publication number:
**WO 2022/224919 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.04.2021 JP 2021071589**
**28.07.2021 JP 2021123405**

(71) Applicant: **Sumitomo Chemical Company Limited**
**Tokyo 103-6020 (JP)**

(72) Inventor: **OKUDA, Ayako**
**Takarazuka-shi, Hyogo 665-8555 (JP)**

(74) Representative: **Vossius & Partner**
**Patentanwälte Rechtsanwälte mbB**
**Siebertstrasse 3**
**81675 München (DE)**

(54) **METHOD FOR CONTROLLING DISEASE-TRANSMITTING INSECTS USING CONDENSED HETEROCYCLIC COMPOUND**

(57) The present invention provides a sanitary insect pest control method, which comprises applying an aerosol comprising at least one compound selected from the group consisting of a compound represented by formula (I):

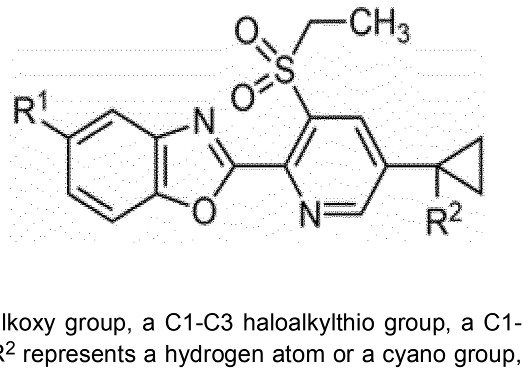

(I)

wherein
$R^1$ represents a C1-C3 haloalkoxy group, a C1-C3 haloalkylthio group, a C1-C3 haloalkylsulfinyl group or a C1-C3 haloalkylsulfonyl group, and $R^2$ represents a hydrogen atom or a cyano group, an N-oxide thereof and a salt thereof, and a propellant to a sanitary insect pest, a place through which the sanitary insect pest can pass, or a place where the sanitary insect pest can inhabit.

EP 4 327 658 A1

## Description

[Technical Field]

This patent application claims the priority and benefit from the Paris Convention based on Japanese Patent Application No. 2021-071589 (filed on April 21, 2021) and Japanese Patent Application No. 2021-123405 (filed on July 28, 2021), the entire content of which is incorporated herein by reference.

The present invention relates to a method for controlling a sanitary insect pest using an aerosol containing a certain fused heterocyclic compound.

[Background Art]

Patent Documents 1 to 4 disclose fused heterocyclic compounds having insecticidal activity.

[Prior Art Document]

[Patent Document]

[Patent Document 1] WO 2017/146226
[Patent Document 2] WO 2020/175491
[Patent Document 3] JP 2014-5263 A
[Patent Document 4] JP 2016-506360 A

[Disclosure of the Invention]

[Problems to be Solved by the Invention]

The present invention provides a method which is more suitable for control of sanitary insect pests as household or commercial insecticides.

[Means for Solving the Problems]

The present invention includes the following aspects but is not limited thereto.

[1] A sanitary insect pest control method, which comprises applying an aerosol (hereinafter referred to as "invented aerosol") comprising at least one compound (hereinafter referred to as "present compound") selected from the group consisting of a compound represented by formula (I) (hereinafter referred to as "compound (1)"):

[Chemical Formula 1]

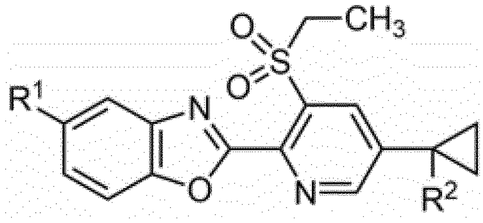

(I)

Wherein

$R^1$ represents a C1-C3 haloalkoxy group, a C1-C3 haloalkylthio group, a C1-C3 haloalkylsulfinyl group or a C1-C3 haloalkylsulfonyl group, and
$R^2$ represents a hydrogen atom or a cyano group, an N-oxide thereof and a salt thereof, and a propellant to a sanitary insect pest, a place through which the sanitary insect pest can pass, or a place where the sanitary insect pest can inhabit.

[2] The sanitary insect pest control method according to [1], wherein the aerosol is an aerosol containing a compound in which $R^1$ is a trifluoromethylsulfinyl group or a trifluoromethylsulfonyl group and $R^2$ is a hydrogen atom in formula (I).
[3] The sanitary insect pest control method according to [1] or [2], wherein the aerosol is an aerosol containing a liquefied gas as the propellant.
[4] The sanitary insect pest control method according to any one of [1] to [3], wherein the aerosol is an aerosol which further contains a hydrocarbon-based solvent.
[5] The sanitary insect pest control method according to any one of [1] to [4], wherein the aerosol is an aerosol which further contains water.
[6] The sanitary insect pest control method according to any one of [1] to [5], wherein the aerosol is an aerosol which further contains at least one insecticidal active ingredient.
[7] The sanitary insect pest control method according to [6], wherein at least one insecticidal active ingredient mentioned above is at least one selected from the group consisting of allethrin, bioallethrin, bioresmethrin, dimefluthrin, empenthrin, epsilon-metofluthrin, epsilon-momfluorothrin, flumethrin, meperfluthrin, metofluthrin, momfluorothrin, prallethrin, profluthrin, resmethrin, tetramethrin, tetramethylfluthrin, transfluthrin, imiprothrin, heptafluthrin, permethrin, phenothrin, cyphenothrin, cypermethrin, cyfluthrin, etofenprox, deltamethrin, fenpropathrin, furamethrin, pyrethrins, acetamiprid, clothianidin, dinotefuran, imidacloprid, thiamethoxam, thiacloprid, indoxacarb, broflanilide, fenitrothion, cyphenothrin, sulfoxaflor, pyriproxyfen, piperonyl butoxide and N-(2-ethylhexyl)-8,9,10-trinorborn-5-ene-2,3-dicarboxyimide.
[8] The sanitary insect pest control method according to any one of [1] to [7], wherein the sanitary insect pest is at least one sanitary insect pest selected from the group consisting of the orders Blattodea, Hymenoptera, Diptera, Siphonaptera, Acari, Lepidoptera and Coleoptera.
[9] An aerosol according to any one of [1] to [6].
[10] The aerosol according to [9], which contains a liquefied petroleum gas as the propellant.
[11] The aerosol according to [10], wherein the aerosol is an aerosol containing the compound of formula (I) in an amount of 0.01 to 5 parts by weight, the liquefied petroleum gas in an amount of 30 to 90 parts by weight, and the hydrocarbon-based solvent in an amount of 20 to 70 parts by weight, per weight of the aerosol.
[12] The aerosol according to any one of [9], [10] and [11], with which a pressure-resistant container is filled.
[13] An aerosol product comprising an aerosol according to any one of [9], [10] and [11] and a pressure-resistant container filled with the aerosol.

[Effects of the Invention]

According to the present invention, the active ingredient can be applied to a place desired in the desired amount without waste by using the aerosol. According to the present invention, the aerosol product can be easily used by simply pressing a button or turning a valve installed in a pressure-resistant container containing the aerosol. The aerosol can be completely sealed and is therefore free from risk of contamination to the surroundings, and also has excellent efficacy and is suitable for control of sanitary insect pests.

[Mode for Carrying Out the Invention]

A description will be made of the present compound which is used in the sanitary insect pest control method of the present invention (hereinafter referred to as "invented method").
The substituent $R^1$ in the compound (I) will be described.
Examples of the C1-C3 haloalkoxy group include a trifluoromethyl group, a difluoromethyl group, a 2,2,2-trifluoroethyl group, a 1,1,2,2-tetrafluoroethyl group, a pentafluoroethyl group, a heptafluoropropyl group and a 2,2,3,3,3-pentafluoropropyl group.
Examples of the C1-C3 haloalkylthio group include a trifluoromethylthio group, a difluoromethylthio group, a 2,2,2-trifluoroethylthio group, a 1,1,2,2-tetrafluoroethylthio group, a pentafluoroethylthio group, a heptafluoropropylthio group and a 2,2,3,3,3-pentafluoropropylthio group.
Examples of the C1-C3 haloalkylsulfinyl group include a trifluoromethylsulfinyl group, a difluoromethylsulfinyl group, a 2,2,2-trifluoroethylsulfinyl group, a 1,1,2,2-tetrafluoroethylsulfinyl group, a pentafluoroethylsulfinyl group, a heptafluoropropylsulfinyl group and a 2,2,3,3,3-pentafluoropropylsulfinyl group.
Examples of the C1-C3 haloalkylsulfonyl group include a trifluoromethylsulfonyl group, a difluoromethylsulfonyl group, a 2,2,2-trifluoroethylsulfonyl group, a 1,1,2,2-tetrafluoroethylsulfonyl group, a pentafluoroethylsulfonyl group, a heptafluoropropylsulfonyl group and a 2,2,3,3,3-pentafluoropropylsulfonyl group.
Examples of the N-oxide of the compound (I) include a compound represented by the formula (II):

[Chemical Formula 2]

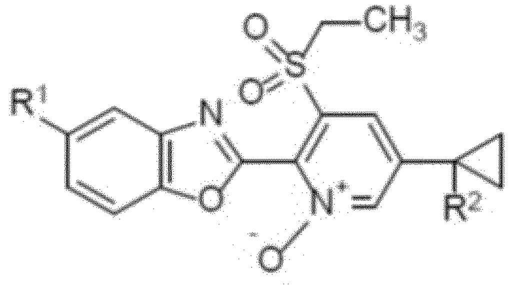

(II)

wherein $R^1$ and $R^2$ are the same as defined above (hereinafter referred to as "compound (II)").

The compound (I) and the compound (II) are preferably compounds in which $R^1$ is a trifluoromethylsulfinyl group or a trifluoromethylsulfonyl group, and $R^2$ is a hydrogen atom.

The present compound may have one or more stereoisomers. Examples of the stereoisomer include an enantiomers and a diastereomer. The present compound includes each stereoisomer and a stereoisomeric mixture in any ratio.

The present compound may form an acid addition salt. Examples of an acid which forms the acid addition salt include inorganic acids such as hydrogen chloride, phosphoric acid and sulfuric acid; and organic acids such as acetic acid, trifluoroacetic acid, benzoic acid and p-toluenesulfonic acid. The acid addition salt is obtained by mixing the present compound with the acid.

Examples of the aspect of the present compound include, but are not limited to, the following compounds.

[Aspect 1] A compound in which $R^1$ is a C1-C3 haloalkylsulfinyl group or a C1-C3 haloalkylsulfonyl group, and $R^2$ is a hydrogen atom.

[Aspect 2] A compound in which $R^1$ is a C1-C3 haloalkylsulfinyl group, and $R^2$ is a hydrogen atom.

[Aspect 3] A compound in which $R^1$ is a C1-C3 haloalkylsulfonyl group, and $R^2$ is a hydrogen atom.

[Aspect 4] A compound in which $R^1$ is a trifluoromethylsulfinyl group or a trifluoromethylsulfonyl group, and $R^2$ is a hydrogen atom.

[Aspect 5] A compound in which $R^1$ is a trifluoromethylsulfinyl group, and $R^2$ is a hydrogen atom.

[Aspect 6] A compound in which $R^1$ is a trifluoromethylsulfonyl group, and $R^2$ is a hydrogen atom.

Next, a method for producing the present compound will be described.

The compound (I) can be produced according to the methods mentioned, for example, in WO 2016/121997, WO 2017/146226 and WO 2020/117487.

(Production Method 1)

The compound (II) can be produced by reacting the compound (I) with an oxidizing agent.

The reaction is usually performed in the presence of a solvent. Examples of the solvent used in the reaction include halogenated hydrocarbons such as dichloromethane and chloroform (hereinafter referred to as halogenated hydrocarbons); nitriles such as acetonitrile nitrile (hereinafter referred to as nitriles); acetic acid; water and a mixture of two or more thereof.

Examples of the oxidizing agent used in the reaction include sodium periodate, m-chloroperoxybenzoic acid and hydrogen peroxide.

When hydrogen peroxide is used as the oxidizing agent, a base or a catalyst may be added as necessary.

Examples of the base used in the reaction include sodium carbonate. When the base is used in the reaction, the base is usually used in the ratio of 0.01 to 1 mol based on 1 mol of the compound (I).

Examples of the catalyst used in the reaction include sodium tungstate. When the catalyst is used in the reaction, the catalyst is usually used in the ratio of 0.01 to 0.5 mol based on 1 mol of the compound (I).

In the reaction, the oxidizing agent is usually used in the ratio of 1 to 2 mol based on 1 mol of the compound (I).

The reaction temperature is usually in the range of - 20 to 120°C. The reaction time is usually in the range of 0.1 to 12 hours.

After completion of the reaction, water is added to the reaction mixture and, after extraction with an organic solvent, the organic layer is washed with an aqueous solution of a reducing agent (for example, sodium sulfite, sodium thiosulfate) and an aqueous solution of a base (for example, sodium hydrogen carbonate) as necessary. A compound

(II) can be obtained by drying and concentrating this organic layer.

The following are examples of the present compound produced according to any of the production methods mentioned herein.

Compound in which $R^1$ and $R^2$ are combinations of any of substituents listed in [Table S1] and [Table S2] in compound (I) (hereinafter referred to as compound group SX1).

Compound in which $R^1$ and $R^2$ are combinations of any of substituents listed in [Table S1] and [Table S2] in compound (II) (hereinafter referred to as compound group SX2).

[Table 1]

[Table S1]

| R1 | R2 |
|---|---|
| $SCF_3$ | H |
| $SCHF_2$ | H |
| $SCH_2F$ | H |
| $SCH_2CF_3$ | H |
| $SCH_2CHF_2$ | H |
| $SCH_2CH_2F$ | H |
| $SCF_2CF_3$ | H |
| $SCF_2CHF_2$ | H |
| $SOCF_3$ | H |
| $SOCHF_2$ | H |
| $SOCH_2F$ | H |
| $SOCH_2CF_3$ | H |
| $SOCH_2CHF_2$ | H |
| $SOCH_2CH_2F$ | H |
| $SOCF_2CF_3$ | H |
| $SOCF_2CHF_2$ | H |
| $SO_2CF_3$ | H |
| $SO_2CHF_2$ | H |
| $SO_2CH_2F$ | H |
| $SO_2CH_2CF_3$ | H |
| $SO_2CH_2CHF_2$ | H |
| $SO_2CH_2CH_2F$ | H |
| $SO_2CF_2CF_3$ | H |
| $SO_2CF_2CHF_2$ | H |
| $OCF_3$ | H |
| $OCHF_2$ | H |
| $OCH_2CF_3$ | H |
| $OCH_2CHF_2$ | H |
| $OCF_2CF_3$ | H |
| $OCF_2CHF_2$ | H |
| $OCH_2CH_2CF_3$ | H |
| $OCH_2CH_2CHF_2$ | H |
| $OCF_2CF_2CF_3$ | H |

[Table S2]

| R1 | R2 |
|---|---|
| $SCF_3$ | CN |
| $SCHF_2$ | CN |
| $SCH_2F$ | CN |
| $SCH_2CF_3$ | ON |
| $SCH_2CHF_2$ | CN |
| $SCH_2CH_2F$ | CN |
| $SCF_2CF_3$ | CN |
| $SCF_2CHF_2$ | CN |
| $SOCF_3$ | CN |
| $SOCHF_2$ | CN |
| $SOCH_2F$ | CN |
| $SOCH_2CF_3$ | CN |
| $SOCH_2CHF_2$ | CN |
| $SOCH_2CH_2F$ | CN |
| $SOCF_2CF_3$ | CN |
| $SOCF_2CHF_2$ | CN |
| $SO_2CF_3$ | CN |
| $SO_2CHF_2$ | CN |
| $SO_2CH_2F$ | CN |
| $SO_2CH_2CF_3$ | CN |
| $SO_2CH_2CHF_2$ | CN |
| $SO_2CH_2CH_2F$ | CN |
| $SO_2CF_2CF_3$ | CN |
| $SO_2CF_2CHF_2$ | CN |
| $OCF_3$ | CN |
| $OCHF_2$ | CN |
| $OCH_2CF_3$ | CN |
| $OCH_2CHF_2$ | CN |
| $OCF_2CF_3$ | CN |
| $OCF_2CHF_2$ | CN |
| $OCH_2CH_2CF_3$ | CN |
| $OCH_2CH_2CHF_2$ | CN |
| $OCF_2CF_2CF_3$ | CN |

The aerosol used in the invented method typically contains the present compound and a propellant, and is used after filling a pressure-resistant container with the aerosol. An aerosol product in which the pressure-resistant container is filled with the aerosol is a device which sprays in the form of mist utilizing the pressure of the propellant.

The aerosol product can be produced by filling a pressure-resistant container with an aerosol containing, for example, the present compound, a solvent, water, and other insecticidal active compounds, a repellent, a synergist, a stabilizer, a perfume and the like which are appropriately mixed as necessary; attaching an aerosol valve to the container; filling the container with a propellant via a stem; shaking the container; and attaching an actuator to the container. Alternatively, the aerosol product can also be produced by simultaneously filling a pressure-resistant container with the present compound, an auxiliary ingredient such as a solvent which may be used as necessary, and a propellant. The aerosol valve is not particularly limited, and a valve having various orifice diameters can be selected as necessary. Examples of the actuator include a button-type and trigger-type actuators.

The material and the volume of the pressure-resistant container are not particularly limited, and examples of the pressure-resistant container include 0.01 to 50 liter pressure-resistant containers made of materials such as iron, aluminum, stainless steel and plastic.

The content of the present compound in the aerosol used in the invented method is usually 0.001 to 10% by weight, and preferably 0.01 to 1% by weight, based on the total amount of the aerosol (comprising the present compound, a propellant, and in addition to these ingredients, at least one ingredient selected from the group consisting of a solvent, water, other insecticidal active ingredients, a repellent, a synergist, a stabilizer and a perfume which may be appropriately used as necessary).

Examples of the propellant contained in the aerosol used in the invented method generally include a liquefied gas. Examples of the liquefied gas include a liquefied petroleum gas, mixtures of C3-C4 hydrocarbons such as propane, propylene, normal butane and isobutane, dimethyl ether and carbon dioxide. The liquefied gas may be used alone, or two or more thereof may be used in combination.

In the aerosol used in the invented method, the propellant is contained in the ratio of 10 to 99% by weight, preferably 20 to 95% by weight, and more preferably 25 to 90% by weight, based on the total amount of the ingredients to be filled (the present compound and a propellant, and at least one ingredient selected from the group consisting of a solvent, water, other insecticidal active ingredients, a repellent, a synergist, a stabilizer and a perfume which may be appropriately used as necessary).

In the aerosol used in the invented method, a solvent can be added as necessary. Examples of the solvent include a linear or branched chain saturated hydrocarbon-based solvent having 10 to 18 carbon atoms, an alicyclic saturated hydrocarbon-based solvent and an aromatic solvent. Examples of the chain saturated hydrocarbon having 10 to 18 carbon atoms include decane, undecane, dodecane, tridecane, tetradecane, pentadecane and 2-methyldecane, examples of the alicyclic hydrocarbon having 10 to 18 carbon atoms include cyclodecane and decalin, and examples of the aromatic solvent include methylnaphthalene, naphthalene, phenyl xylyl ethane and the like.

For the purpose of reducing a wet state on the surface to be sprayed, a solvent with a smaller carbon number may be added as necessary.

Specific examples of the linear or branched chain saturated hydrocarbon-based solvent and the alicyclic saturated hydrocarbon-based solvent include, but are not limited to, linear saturated hydrocarbon-based solvents such as Neothiozole (trade name, Chuo Kasei Co., Ltd.), NORPAR 12 (trade name, Exxon Mobil Corporation), NORPAR 13 (trade name, Exxon Mobil Corporation) and NORPAR 15 (trade name, Exxon Mobil Corporation); branched saturated hydrocarbon-based solvents such as ISOPAR E (trade name, Exxon Mobil Corporation), ISOPAR G (trade name, Exxon Mobil Corporation), ISOPAR H (trade name, Exxon Mobil Corporation), ISOPAR M (trade name, Exxon Mobil Corporation), ISOPAR V (trade name, Exxon Mobil Corporation) and IP-2028 (trade name, Idemitsu Petrochemical Co., Ltd.); and alicyclic saturated hydrocarbon-based solvent such as EXXSOL D40 (trade name, Exxon Mobil Corporation), EXXSOL D80 (trade name, Exxon Mobil Corporation), EXXSOL D110 (trade name, Exxon Mobil Corporation) and EXXSOL D130 (trade name, Exxon Mobil Corporation).

Examples of the aromatic solvent include Solvesso 200 (trade name, Exxon Mobil Corporation), Solvesso 150 (trade name, Exxon Mobil Corporation) and phenyl xylyl ethane (trade name, Asahi Petrochemical Co., Ltd.).

The aerosol used in the invented method may contain a solubility auxiliary ingredient such as an ester-based solvent or an alcohol-based solvent if necessary.

Examples of the ester-based solvent include an ester-based solvent having 12 to 30 carbon atoms. Specific examples thereof include a carboxylic acid alkyl ester having 12 to 30 carbon atoms, and more specific examples thereof include an alkylcarboxylic acid alkyl ester having 12 to 30 carbon atoms, such as isopropyl myristate, hexyl laurate or isopropyl palmitate; a dicarboxylic acid dialkyl ester having 12 to 30 carbon atoms, such as diisopropyl adipate, dioctyl adipate, diisononyl adipate or diisodecyl adipate; an acetylcitric acid trialkyl ester having 12 to 30 carbon atoms, such as triethyl acetylcitrate or tributyl acetylcitrate; a citric acid trialkyl ester having 12 to 30 carbon atoms, such as triethyl citrate; and a phthalic acid dialkyl ester having 12 to 30 carbon atoms, such as dibutyl phthalate or diisononyl phthalate.

Examples of the ester-based solvent are more preferably an alkylcarboxylic acid alkyl ester having 12 to 30

carbon atoms, a dicarboxylic acid dialkyl ester having 12 to 30 carbon atoms, an acetylcitric acid trialkyl ester having 12 to 30 carbon atoms, a citric acid trialkyl ester having 12 to 30 carbon atoms and a phthalic acid dialkyl ester having 12 to 30 carbon atoms, and still more preferably an alkylcarboxylic acid alkyl ester having 12 to 30 carbon atoms, a dicarboxylic acid dialkyl ester having 12 to 30 carbon atoms and an acetylcitric acid trialkyl ester having 12 to 30 carbon atoms.

Specific examples of the ester-based solvent include ethyl acetate, butyl acetate, amyl acetate, isoamyl acetate, isobornyl acetate, hexyl acetate, heptyl acetate, octyl acetate, isopropyl myristate, methyl octanoate, methyl oleate, methyl laurate, dibutyl adipate, diisopropyl adipate, dioctyl adipate, diisononyl adipate, diisodecyl adipate, tributyl citrate, triethyl acetylcitrate, tributyl acetylcitrate, ethyl lactate, propyl lactate, ethylene carbonate, propylene carbonate, butylene carbonate, diethyl carbonate and dibutyl carbonate.

Specific examples of the alcohol-based solvent include methanol, ethanol, butanol, propanol, isopropanol, butanol, amyl alcohol, hexanol, heptanol, octanol, 2-ethylhexanol, hexylene glycol, cyclohexanol, phenol, benzyl alcohol, methoxypropanol (1-methoxy-2-propanol), tetrahydrofurfuryl alcohol, furfuryl alcohol, polyethylene glycol, ethylene glycol, diethylene glycol, hexylene glycol, ethylene glycol methyl ether, diethylene glycol methyl ether, diethylene glycol butyl ether, triethylene glycol, propylene glycol methyl ether, dipropylene glycol, ethylene glycol monomethyl ether, ethylene glycol monoethyl ether, ethylene glycol butyl ether, dipropylene glycol methyl ether, dipropylene glycol ether, dipropylene glycol monomethyl ether and glycerin.

The aerosol used in the invented method may contain water as the solvent as necessary. Water is usually added in the ratio of 40 to 1,000 times the weight the present compound.

In the aerosol used in the invented method, the solvent may be used alone, or two or more thereof may be used in combination.

When water is used as the solvent, a surfactant may be added as necessary. Examples of the surfactant include, but are not particularly limited to, a nonionic surfactant, an anionic surfactant, a cationic surfactant and an amphoteric surfactant. Of these, the nonionic surfactant is preferable in view of the safety.

Examples of the nonionic surfactant include a higher fatty acid ester of sorbitan, for example, a C12 to C18 fatty acid monoester of sorbitan and a C12 to C18 fatty acid diester of sorbitan (for example, sorbitan monooleate, sorbitan dioleate, sorbitan monolaurate, sorbitan monostearate, sorbitan distearate, sorbitan monoisostearate, sorbitan monopalmitate).

In the aerosol used in the present invention, the content of the nonionic surfactant is 0.1 to 5% by weight based on the total amount of the ingredients of the aerosol (the present compound, a propellant, and at least one ingredient selected from the group consisting of a solvent, water, other insecticidal active ingredients, a repellent, a synergist, a stabilizer and a perfume which may be appropriately used as any other ingredient).

The aerosol used in the present invention may further contain one or more other insecticidal active compounds, repellents, synergists and the like. Examples of combinations of the present compound and other insecticidal active compounds, repellents and synergist are listed below. For example, alanycarb+SX means the combination of alanycarb and each SX listed in the above table.

More particularly, the abbreviation of "SX" means any one of the present compounds selected from the compound groups SX1 to SX2 listed in the above table. All of other insecticidal active compound, repellents and synergists listed below are known ingredients, and can be obtained from commercially available formulations, or can be produced by known methods.

Combinations of other insecticidal active compounds and the present compound:

abamectin+SX, acephate+SX, acequinocyl+SX, acetamiprid+SX, acetoprole+SX, acrinathrin+SX, acynonapyr+SX, afidopyropen+SX, afoxolaner+SX, alanycarb+SX, aldicarb+SX, allethrin+SX, alpha-cypermethrin+SX, alpha-endosulfan+SX, aluminium phosphide+SX, amitraz+SX, azadirachtin+SX, azamethiphos+SX, azinphos-ethyl+SX, azinphos-methyl+SX, azocyclotin+SX, bark of Celastrus angulatus+SX, bendiocarb+SX, benfluthrin+SX, benfuracarb+SX, bensultap+SX, benzoximate+SX, benzpyrimoxan+SX, beta-cyfluthrin+SX, beta-cypermethrin+SX, bifenazate+SX, bifenthrin+SX, bioallethrin+SX, bioresmethrin+SX, bistrifluron+SX, borax+SX, boric acid+SX, broflanilide+SX, bromopropylate+SX, buprofezin+SX, butocarboxim+SX, butoxycarboxim+SX, cadusafos+SX, calcium phosphide+SX, carbaryl+SX, carbofuran+SX, carbosulfan+SX, cartap hydrochloride+SX, cartap+SX, cevadine+SX, chinomethionat+SX, chlorantraniliprole+SX, chlordane+SX, chlorethoxyfos+SX, chlorfenapyr+SX, chlorfenvinphos+SX, chlorfluazuron+SX, chlormephos+SX, chloropicrin+SX, chlorpyrifos+SX, chlorpyrifos-methyl+SX, chromafenozide+SX, clofentezine+SX, clothianidin+SX, concanamycin A+SX, coumaphos+SX, cryolite+SX, cyanophos+SX, cyantraniliprole+SX, cyclaniliprole+SX, cyclobutrifluram+SX, cycloprothrin+SX, cycloxaprid+SX, cyenopyrafen+SX, cyetpyrafen+SX, cyflumetofen+SX, cyfluthrin+SX, cyhalodiamide+SX, cyhalothrin+SX, cyhexatin+SX, cypermethrin+SX, cyphenothrin+SX, cyproflanilide+SX, cyromazine+SX, dazomet+SX, deltamethrin+SX, demeton-S-methyl+SX, diafenthiuron+SX, diazinon+SX, dichlorvos+SX, dicloromezotiaz+SX, dicofol+SX, dicrotophos+SX, diflovidazin+SX, diflubenzuron+SX, dimefluthrin+SX, dimethoate+SX, dimethylvinphos+SX, dimpropyridaz+SX, dinotefuran+SX, disodium octaborate+SX, disulfoton+SX, DNOC (2-methyl-4,6-dinitrophenol)+SX, doramectin+SX, dried leaves of Dryopteris filix-mas+SX, emamectin-benzoate+SX, empenthrin+SX, endosulfan+SX, EPN (a-ethyl O-(4-nitrophenyl) phenylphosphonothioate)+SX, epsilon-metofluthrin+SX, epsilon-momfluorothrin+SX, esfenvalerate+SX, ethiofencarb+SX, ethion+SX, ethiprole+SX, ethoprophos+SX, etofenprox+SX, etoxazole+SX, extract of Artemisia absinthium+SX, extract of Azadirachta indica+SX, Extract of Cassia nigricans+SX, extract of clitoria ternatea+SX, extract of Symphytum officinale+SX, extracts or simulated blend of Chenopodium ambrosioides+SX, extract of Tanacetum vulgare+SX, extract of Urtica dioica+SX, extract of Viscum album+SX, extract of Tanacetum cinerariifolium+SX,famphur+SX, fenamiphos+SX, fenazaquin+SX, fenbutatin oxide+SX, fenitrothion+SX, fenmezoditiaz+SX, fenobucarb+SX, fenoxycarb+SX, fenpropathrin+SX, fenpyroximate+SX, fenthion+SX, fenvalerate+SX, fipronil+SX, flometoquin+SX, flonicamid+SX, fluacrypyrim+SX, fluazaindolizine+SX, fluazuron+SX, flubendiamide+SX, fluchlordiniliprole+SX, flucycloxuron+SX,
flucythrinate+SX, fluensulfone+SX, flufenoprox+SX, flufenoxuron+SX, flufiprole+SX, flumethrin+SX, flupentiofenox+SX, flupyradifurone+SX, flupyrimin+SX, fluralaner+SX, fluvalinate+SX, fluxametamide+SX, formetanate+SX, fosthiazate+SX, furamethrin+SX, furathiocarb+SX, gamma-cyhalothrin+SX, GS-omega/kappa HXTX-Hvla peptide+SX, halfenprox+SX, halofenozide+SX, heptafluthrin+SX, heptenophos+SX, hexaflumuron+SX, hexythiazox+SX, potassium salt of hop beta acid+SX, hydramethylnon+SX, hydroprene+SX, imicyafos+SX, imidacloprid+SX, imidaclothiz+SX, imiprothrin+SX, indazapyroxamet+SX, indoxacarb+SX, isocycloseram+SX, isofenphos+SX, isoprocarb+SX, isopropyl-O-(methoxyaminothiophosphoryl) salicylate+SX, isoxathion+SX, ivermectin+SX, kadethrin+SX, kappa-tefluthrin+SX, kappa-bifenthrin+SX, kinoprene+SX, lambda-cyhalothrin+SX, lenoremycin+SX, lepimectin+SX, lime sulfur+SX, lotilaner+SX, lufenuron+SX, machine oil+SX, malathion+SX, mecarbam+SX, meperfluthrin+SX, metaflumizone+SX, metam+SX, methamidophos+SX, methidathion+SX, methiocarb+SX, methomyl+SX, methoprene+SX, methoxychlor+SX, methoxyfenozide+SX, methyl bromide+SX, metofluthrin+SX, metolcarb+SX, metoxadiazone+SX, mevinphos+SX, milbemectin+SX, milbemycin oxime+SX, momfluorothrin+SX, monocrotophos+SX, moxidectin+SX, naled+SX, nicofluprole+SX, nicotine+SX, nicotine-sulfate+SX, nitenpyram+SX, novaluron+SX, noviflumuron+SX, oil of the seeds of Chenopodium anthelminticum+SX, omethoate+SX, oxamyl+SX, oxazosulfyl+SX, oxydemeton-methyl+SX, parathion+SX, parathion-methyl+SX, permethrin+SX, phenothrin+SX, phenthoate+SX, phorate+SX, phosalone+SX, phosmet+SX, phosphamidon+SX, phosphine+SX, phoxim+SX, pirimicarb+SX, pirimiphos-methyl+SX, prallethrin+SX, profenofos+SX,
profluthrin+SX, propargite+SX, propetamphos+SX, propoxur+SX, propylene glycol alginate+SX, prothiofos+SX, pyflubumide+SX, pymetrozine+SX, pyraclofos+SX, pyrethrins+SX, pyridaben+SX, pyridalyl+SX, pyridaphenthion+SX, pyrifluquinazone+SX, pyrimidifen+SX, pyriminostrobin+SX, pyriprole+SX, pyriproxyfen+SX, quinalphos+SX, resmethrin+SX, rotenone+SX, ryanodine+SX, sarolaner+SX, Seed extract of Anethum Graveolens+SX, seed extract of Schoenocaulon spp.+SX, selamectin+SX, sigma-cypermethrin+SX, silafluofen+SX, sodium borate+SX, sodium metaborate+SX, spidoxamat+SX, spinetoram+SX, spinosad+SX, spirodiclofen+SX, spiromesifen+SX, spiropidion+SX, spirotetramat+SX, sulfluramid+SX, sulfotep+SX, sulfoxaflor+SX, sulfur+SX, sulfuryl fluoride+SX, tartar emetic+SX, tau-fluvalinate+SX, tebufenozide+SX, tebufenpyrad+SX, tebupirimfos+SX, teflubenzuron+SX, tefluthrin+SX, temephos+SX, terbufos+SX, terpene constituents of the extract of chenopodium terpene constituents of the extract of chenopodium ambrosioides near ambrosioides+SX, tetrachlorantraniliprole+SX, tetrachlorvinphos+SX, tetradifon+SX, tetramethrin+SX, tetramethylfluthrin+SX, tetraniliprole+SX, theta-cypermethrin+SX, thiacloprid+SX, thiamethoxam+SX, thiocyclam+SX, thiodicarb+SX, thiofanox+SX, thiometon+SX, thiosultap-disodium+SX, thiosultap-monosodium+SX, tioxazafen+SX, tolfenpyrad+SX, tralomethrin+SX, transfluthrin+SX, triazamate+SX, triazophos+SX, trichlorfon+SX,
trifluenfuronate+SX, triflumezopyrim+SX, triflumuron+SX, trimethacarb+SX, tyclopyrazoflor+SX, vamidothion+SX, veratridine+SX, wood extract of Quassia amara+SX, XMC (3,5-dimethylphenyl N-methylcarbamate)+SX, xylylcarb+SX, zeta-cypermethrin+SX, zinc phosphide+SX, 4-[5-(3,5-dichlorophenyl)-5-(trifluoromethyl)-4,5-dihydro-1,2-oxazol-3-yl]-2-methyl-N-(1-oxothietan-3-yl)benzamide (1241050-20-3)+SX, 3-methoxy-N-(5-{5-(trifluoromethyl)-5-[3-(trifluoromethyl)phenyl]-4,5-dihydro-1,2-oxazol-3-yl}indan-1-yl)propanamide (1118626-57-5)+SX, 2-({2-fluoro-4-methyl-5-[(2,2,2-trifluoroethyl)sulfinyl]phenyl}imino)-3-(2,2,2-trifluoroethyl)-1,3-thiazolidin-4-one (1445683-71-5)+SX, (2Z)-2-({2-fluoro-4-methyl-5-[(R)-(2,2,2-trifluoroethyl)sulfinyl]phenyl}imino)-3-(2,2,2-trifluoroethyl)-1,3-thiazolidin-4-one (2377084-09-6)+SX, N-{4-chloro-3-[(1-cyanocyclopropyl)carbamoyl]phenyl}-1-methyl-4-(methanesulfonyl)-3-(1,1,2,2,2-pentafluoroethyl)-1H-pyrazole-3-carboxamide (1400768-21-9)+SX, 3-(4'-fluoro-2,4-dimethyl[1,1'-biphenyl]-3-yl)-4-hydroxy-8-oxa-1-azaspiro[4.5]dec-3-en-2-one (1031385-91-7)+SX, N-[3-chloro-1-(pyridin-3-yl)-1H-pyrazol-4-yl]-2-(methanesulfonyl)propanamide (2396747-83-2)+SX, 1,4-dimethyl-2-[2-(pyridin-3-yl)-2H-indazol-5-yl]-1,2,4-triazolidine-3,5-dione (2171099-09-3)+SX, 2-isopropyl-5-[(3,4,4-trifluoro-3-buten-1-yl)sulfonyl]-1,3,4-thiadiazole (2058052-95-0)+SX, and N-({2-fluoro-4-[(2S,3S)-2-hydroxy-3-(3,4,5-trichlorophenyl)-3-(trifluoromethyl)pyrrolidin-1-yl]phenyl}methyl)cyclopropanecarboxamide+SX.

Combinations of the repellent and the present compound:

anthraquinone+SX, chloralose+SX, acrep+SX, butopyronoxyl+SX, camphor+SX, d-camphor+SX, carboxide+SX, dibutyl phthalate+SX, deet+SX, dimethyl carbate+SX, dimethyl phthalate+SX, dibutyl succinate+SX, dibutyl adipate+SX, ethohexadiol+SX, hexamide+SX, icaridin+SX, methoquin-butyl+SX, methylneodecanamide+SX, 2-(octylthio)ethanol+SX, butoxypolypropylene glycol+SX, oxamate+SX, quwenzhi+SX, quyingding+SX, zengxiaon+SX, rebemide+SX, copper naphthenate+SX and zinc naphthenate+SX.

Combinations of the synergist and the present compound:

1-dodecyl-1H-imidazole+SX, N-(2-ethylhexyl)-8,9,10-trinorborn-5-ene-2,3-dicarboximide+SX, bucarpolate+SX, N,N-dibutyl-4-chlorobenzenesulfonamide+SX, dietholate+SX, diethylmaleate+SX, piperonyl butoxide+SX, piperonyl cyclonene+SX, piprotal+SX, propyl isome+SX, safroxan+SX, sesamex+SX, sesamolin+SX, sulfoxide+SX, Verbutin+SX, DMC (1,1-bis(4-chlorophenyl)ethanol)+SX, FDMC (1,1-bis(4-chlorophenyl)-2,2,2-trifluoroethanol)+SX, ETN (1,2-epoxy-1,2,3,4-tetrahydronaphthalene)+SX, ETP (1,1,1-trichloro-2,3-expoxypropane)+SX, PSCP (phenylsaligenin cyclic phosphate)+SX, TBPT (S,S,S-tributyl phosphorotrithioate)+SX, and TPP (triphenyl phosphate)+SX.

Of the above other insecticidal active compounds, repellents and synergist which may be further contained, preferred are one or more compounds selected from the group consisting of the following compounds: allethrin, bioallethrin, bioresmethrin, dimefluthrin, empenthrin, epsilon-metofluthrin, epsilon-momfluorothrin, flumethrin, meperfluthrin, metofluthrin, momfluorothrin, prallethrin, profluthrin, resmethrin, tetramethrin, tetramethylfluthrin, transfluthrin, imiprothrin, heptafluthrin, permethrin, phenothrin, cyphenothrin, cypermethrin, cyfluthrin, etofenprox, deltamethrin, fenpropathrin, furamethrin, pyrethrins, acetamiprid, clothianidin, dinotefuran, imidacloprid, thiamethoxam, thiacloprid, indoxacarb, broflanilide, fenitrothion, cyphenothrin, sulfoxaflor, pyriproxyfen, piperonyl butoxide and N-(2-ethylhexyl)-8,9,10-trinorborn-5-ene-2,3-dicarboximide.

A buffer, a perfume, a rust preventive, a mildewproofing agent and a pH adjuster can be added to the aerosol which can be used in the present method, as necessary, as long as the object of the invention is achieved.

The spray amount of the pest control aerosol used in the invented method at 20°C can vary depending on the spray amount per second and the spray time, for example, the spray time is 0.5 second to 10 seconds, but is not limited. The spray amount and the spray time are, for example, 1 to 200 g/5 seconds, preferably 1 to 50 g/5 seconds, and more preferably 1 to 30 g/5 seconds. When the spray amount is in the above range, the wetting of the surface to be sprayed by spray particles is reduced, leading to excellent usability. The spray amount of the one-push aerosol at 20°C is not particularly limited, but is, for example, 0.01 to 0.5 g, preferably 0.05 to 0.3 g, and more preferably 0.1 to 0.2 g, per one push. Spraying may be performed plural times by a one-push operation.

The spray amount can be adjusted by adjusting the specification of an aerosol valve, the diameter of a spray port of a spray button, the shape of a nozzle and the like, or by adjusting the type of the propellant, the ratio of an undiluted solution to the propellant, the internal pressure of the container or the like. The internal pressure of the container is preferably 0.3 to 0.6 MPa.

The particle diameter of the compound sprayed through the spray port is not particularly limited, but is, for example, 1 to 250 um, preferably 3 to 100 μm, and more preferably 5 to 50 um, in terms of a representative particle size at 20°C and a spray distance of 30 cm (representative particle size calculated by the Rosin-Rammler distribution method: XR value). Specifically, the particle diameter is, for example, 1.5, 10, 14, 15, 30, 50, 100 or 200 um. In the case of the one-push aerosol, the particle diameter is in the same range.

The control method of the present invention is performed by spraying an effective amount of the present compound to a sanitary insect pest, a place through which the sanitary insect pest can pass and/or a place where the sanitary insect pest can inhabit. Specifically, the method is performed by spraying the aerosol containing the present compound to a sanitary insect pest, a place through which the sanitary insect pest can pass and/or a place where the sanitary insect pest can inhabit.

The term "control" in the present invention means including extermination and prevention.

In practical use, it is desirable to spray the aerosol containing the present compound to the space of a place to be controlled. The amount of the aerosol sprayed is usually 0.001 to 1,000 mg/$m^3$, preferably 0.001 to 100 mg/$m^3$, and more preferably 0.01 to 10 mg/$m^3$. Examples of the space to which the aerosol containing the present compound is sprayed include rooms, living rooms, dining rooms, closets, chests such as Japanese chest, cupboards, toilets, bathrooms, storage rooms, warehouses and car interiors, and the aerosol can also be sprayed to outdoor open space.

In order to enhance insecticidal properties and persistence, and to provide a control method which is also effective against sanitary insect pests having the resistance to the insecticide, the invented method can be used for a total amount spraying-type aerosol.

As used herein, the sanitary insect pest include arthropods and mollusks which are harmful to humans and domestic animals, and arthropods and mollusks which are disliked because of their weird shapes or large outbreaks (also referred to as "nuisance insect pests"). Specific examples thereof include the following.

Blattodea:

Family: Ectobiidae such as German cockroach (Blattella germanica); and Family: Blattidae such as smoky-brown cockroach (Periplaneta fuliginosa), American cockroach (Periplaneta Americana), Australian cockroach (Periplaneta australasiae), brown cockroach (Periplaneta brunnea), black cockroach (Blatta orientalis), Turkistan cockroach (Blatta lateralis) and Brown-banded cockroach (Supella longipalpa).

Siphonaptera:

Family: Pulicidae such as human flea (Pulex irritans), cat flea (Ctenocephalides felis), dog flea (Ctenocephalides canis), oriental rat flea (Xenopsylla cheopis) and chicken flea (Echidnophaga gallinacea); Family: Hectopsyllidae such as chigoe flea (Tunga penetrans); and Family: Ceratophyllidae such as European rat flea (Nosopsyllus fasciatus).

Psocodae:

Family: Trogiidae such as book lice (Trogium pulsatorium); and Family: Liposcelidae or Liposcelididae such as book lice (Liposcelis corrodens), book lice (Liposcelis bostrychophila), Grocelis booklouse (Liposcelis pearmani) and dried fish booklouse (Liposcelis entomophila).

Thysanura:

Family: Lepismatidae such as oriental silverfish (Ctenolepisma villosa) and moth fish (Lepisma saccharina).

Acari:

Family: Ixodidae such as Haemaphysalis longicornis, Haemaphysalis flava, Haemaphysalis japonica, Haemaphysalis campanulata, American dog tick (Dermacentor variabilis), Dermacentor taiwanensis, Rocky Mountain wood tick (Dermacentor andersoni), ornate cow tick (Dermacentor reticulatus), Ixodes ovatus, taiga tick (Ixodes persulcatus), black-legged tick (Ixodes scapularis), western black-legged tick (Ixodes pacificus), Ixodes holocyclus, Ixodes ricinus, lone star tick (Amblyomma americanum), gulf coast tick (Amblyomma maculatum), pantropic cattle tick (Rhipicephalus microplus), cattle tick (Rhipicephalus annulatus), brown dog tick (Rhipicephalus sanguineus), Rhipicephalus appendiculatus and Rhipicephalus decoloratus; Family: Argasidae such as fowl tick (Argas persicus), Ornithodoros hermsi and Ornithodoros turicata; Family: Acaridae such as cereal mite (Tyrophagus putrescentiae) and grassland mite (Tyrophagus similis); Family: Pyroglyphidae such as American house dust mite (Dermatophagoides farinae) and European house dust mite (Dermatophagoides pteronyssinus); Family: Cheyletidae such as Cheyletus eruditus, Cheyletus malaccensis, Chelacaropsis moorei and Cheyletiella yasguri; Family: Psoroptidae such as sheep scab mite (Psoroptes ovis), horse psoroptic mange mite (Psoroptes equi), Knemidocoptes mutans, ear mange mite (Otodectes cynotis) and genus Chorioptes spp.; Family: Sarcoptidae such as Notoedres cati, Notoedres muris and itch mite (Sarcoptes scabiei); Family: Listrophoridae such as Listrophorus gibbus; Family: Dermanyssidae such as bird mite (Dermanyssus gallinae); Family: Macronyssidae such as feather mite (Ornithonyssus sylviarum) and tropical rat mite (Ornithonyssus bacoti); Family: Varroidae such as Varroa mite (Varroa jacobsoni); Family: Demodicidae such as dog follicle mite (Demodex canis) and cat follicle mite (Demodex cati); and Family: Trombiculidae such as Leptotrombidium akamushi, Leptotrombidium pallidum and Leptotrombidium scutellare.

Hymenoptera:

Family: Formicidae, for example, Genus: Solenopsis spp. such as red imported fire ant (Solenopsis invicta), tropical fire ant (Solenopsis geminata), southern fire ant (Solenopsis xyloni) and black imported fire ant (Solenopsis richteri), Genus: Atta spp. such as brown leaf-cutting ant (Atta capiguara), Genus: Acromyrmex spp., Genus: Camponotus spp. such as bullet ant (Paraponera clavata), black house ant (Ochetellus glaber), little red ant (Monomorium pharaonis), Argentine ant (Linepithema humile), fire ant (Formica japonica), Japanese queenless ant (Pristomyrmex punctutus), African big-headed ant (Pheidole noda), big-headed ant (Pheidole megacephala), Japanese carpenter ant (Camponotus japonicus), Western honey bee (Camponotus obscuripes), black carpenter ant (Camponotus pennsylvanicus), Florida carpenter ant (Camponotus floridanus) and Western carpenter ant (Camponotus modoc), Genus: Pogonomyrmex spp. such as harvester ant (Pogonomyrmex sp.) and western harvester ant (Pogonomyrmex occidentalis), Genus: Wasmania spp. such as little fire ant (Wasmania auropunctata), Genus: Crematogaster spp., odorous house ant (Tapinoma sessile), pavement ant (Tetramorium caespitum), pyramid ant (Dorymyrmex insanus), European fire ant (Myrmica rubra) and long-legged ant (Anoplolepis gracilipes); Family: Vespidae such as Asian giant hornet (Vespa mandarinia), Japanese

yellow hornet (Vespa simillima), yellow-vented hornet (Vespa analis), Asian yellow-legged hornet (Vespa velutina) and Dark-waist paper wasp (Polistes jokahamae); Family: Siricidae such as woodwasp (Urocerus gigas); and Family: Bethylidae.

Coleoptera:

Family: Curculionidae such as maize wevil (Sitophilus zeamais), rice weevil (Sitophilus oryzae) and grain weevil (Sitophilus granarius); Family: Tenebrionidae such as red meal beetle (Tribolium castaneum), mason beetle (Tribolium confusum) and lesser mealworm (Alphitobius diaperinus); Family: Bostrychidae such as common powder-post beetle (Lyctus brunneus) and lesser grain borer (Rhizopertha dominica); Family: Ptinidae; Family: Cerambycidae such as citrus longhorned beetle (Anoplophora malasiaca), Migdolus fryanus and redneck longhorned beetle (Aromia bungii); Family: Elateridae such as sugarcane wireworm (Melanotus okinawensis), barley wireworm (Agriotes fuscicollis), click beetles (Melanotus legatus), genus Anchastus spp., genus Conoderus spp., genus Ctenicera spp., genus Limonius spp. and genus Aeolus spp.; Family: Staphylinidae such as rove beetle (Paederus fuscipes); Family: Dermestidae such as varied carpet beetle (Anthrenus verbasci), hide beetle (Dermestes maculates) and khapra beetle (Trogoderma granarium); Family: Anobiidae such as tobacco beetle (Lasioderma serricorne) and biscuit beetle (Stegobium paniceum); Family: Laemophloeidae such as flat grain beetle (Cryptolestes ferrugineus); Family: Silvanidae such as sawtoothed grain beetle (Oryzaephilus surinamensis); and Family: Nitidulidae such as blossom beetle (Brassicogethes aeneus).

Diptera:

Family: Drosophilidae such as cherry drosophila (Drosophila suzukii) and common fruit fly(Drosophila melanogaster); Family: Phoridae such as Megaselia spiracularis; Family: Psychodidae such as bathroom fly (Clogmia albipunctata); Family: Sciaridae such as Bradysia difformis; Family: Culicidae such as southern house mosquito (Culex pipiens pallens), house mosquito (Culex tritaeniorhynchus), autogenic house mosquito (Culex pipiens f. molestus), brown house mosquito (Culex quinquefasciatus), northern house mosquito (Culex pipiens pipiens), Culex vishnui, Asian tiger mosquito (Aedes albopictus), dengue mosquito (Aedes aegypti), Chinese malaria mosquito (Anopheles sinensis), African malaria mosquito (Anopheles gambiae), Anopheles stephensi, Western malaria mosquito (Anopheles freeborni), woodland malaria mosquito (Anopheles punctipennis), common malaria mosquito (Anopheles quadrimaculatus), Anopheles coluzzii, Anopheles albimanus, Anopheles sundaicus, Anopheles arabiensis, Anopheles funestus, Anopheles darlingi, Anopheles farauti and Anopheles minimus; Family: Simulidae such as Prosimulium yezoensis, Simulium ornatum and black fly (Simulium spp.); Family: Tabanidae such as Gadfly (Tabanus trigonus), black house fly (Tabanus atratus), stripe black house fly (Tabanus lineola) and deer fly (Chrysops sp.); Family: Muscidae such as house fly (Musca domestica), false stable fly (Muscina stabulans), biting house fly (Stomoxys calcitrans) and buffalo fly (Haematobia irritans); Family: Calliphoridae such as Lucilia sp., Calliphora sp.; Family: Sarcophagidae such as flesh fly (Sarcophaga sp., Wohlfahrtia sp.); Family: Ceratopogonidae such as black gnat (Leptoconops sp.); Family: Chironomidae such as non-biting midges (Chironomus plumosus), Chironomus yoshimatsui and Glyptotendipes tokunagai; and Family: Fannidae.

Lepidoptera:

Family: Tineidae such as casemaking clothes moth (Tinea translucens) and common clothes moth (Tineola bisselliella).

Hemiptera:

Family: Cimicidae such as common bed bug (Cimex lectularius), and tropical bed bug (Cimex hemipterus); and Family: Cicadidae such as Quesada gigas; and Family: Reduviidae such as Triatoma infestans, Triatoma rubrofasciata, Triatoma dimidiata, Triatoma sanguisuga, Triatoma protracta, and Rhodonius prolixus.

Araneae:

Family: Eutichuridae such as Cheiracanthium japonicum; Family: Theridiidae such as red-back spider (Latrodectus hasseltii).

Polydesmida:

Family: Paradoxosomatidae such as flat-backed millipede (Oxidus gracilis) and Nedyopus tambanus.

Isopoda:

Family: Armadillidiidae such as common pill bug (Armadillidium vulgare).

Chilopoda:

Family: Scutigeridae such as Thereuonema hilgendorfi; Family: Scolopendridae such as giant tropical centipede (Scolopendra subspinipes); and Family: Ethopolyidae such as Bothropolys rugosus.

Gastropoda:

Family: Limacidae such as tree slug (Limax marginatus) and garden tawny slug (Limax flavus); Family: Philomycidae such as Japanese native slug (Meghimatium bilineatum); Family: Ampullariidae such as golden apple snail (Pomacea canaliculata); and Family: Lymnaeidae such as pond snail (Austropeplea ollula).

[Examples]

The present inventions will be described in more detail by way of Examples such as Formulation Examples and Test Examples, but the present invention should not be construed to be limited thereto.
First, Formulation Examples will be mentioned.

Formulation Example 1

In an aerosol container, 4.3 parts of SX and 10.0 parts of isopropyl myristate were charged, and a valve was attached to the aerosol container. The aerosol container was filled with 85.7 parts of a propellant (liquefied petroleum gas (propane/butane mixture, gas pressure of 4.8 kg/cm$^2$, 20°C)) via the valve, and then an actuator was attached to obtain an oily aerosol containing the present compound.

Formulation Example 2

In an aerosol container (TOYO SEIKAN CO., LTD., WE290WO), 0.1 part of SX, 9.0 parts of Solvesso 200ND and 20.9 parts of Neothiozole were charged, and a valve was attached to the aerosol container. The aerosol container was filled with 70 parts of a propellant (a mixture of liquefied petroleum gas (propane/butane mixture, gas pressure of 3.5 kg/cm$^2$, 20°C) and dimethyl ether at a weight ratio of 1:1) via the valve, and then an actuator was attached to obtain an oily aerosol containing the present compound.

Formulation Example 3

In an aerosol container, an aqueous solution obtained by dissolving 0.1 part of SX in 60 parts of deionized water was charged. A solution obtained by dissolving 1 part of sorbitan monooleate (trade name: RHEODOL SP-010, Kao Corporation) in 18.9 parts of Neothiozole (saturated hydrocarbon-based solvent, Chuo Kasei Co., Ltd.) was added in the aerosol container, and a valve was attached to the aerosol container. The aerosol container was filled with 20 parts of a propellant (liquefied petroleum gas (propane/butane mixture, gas pressure of 3.5 kg/cm$^2$, 20°C)) via the valve, and then an actuator was attached to obtain an aqueous aerosol containing the present compound.

Formulation Example 4

In an aerosol container, 0.2 part of SX and 10.0 parts of anhydrous ethanol were charged, and a valve was attached to the aerosol container. The aerosol container was filled with 89.8 parts of dimethyl ether via the valve, and then an actuator was attached to obtain a total amount spraying-type aerosol.

Formulation Example 5

In a pressure-resistant container, 0.1 part of SX was changed in advance, and after attaching a pressure valve to the pressure-resistant container, 99.9 parts of a propellant (liquefied carbon dioxide) was injected from the nozzle side to obtain an aerosol.
Next, Test Examples indicate that the invented method has excellent control effect. The present compound A, the present compound B, and comparative compounds 1 to 4 are compounds listed in Table 2. Comparative compounds

1 and 2 are compounds mentioned in Patent Document 4, and comparative compounds 3 and 4 are compounds mentioned in Patent Document 3.

[Table 2]

| | |
|---|---|
| Present compound A | 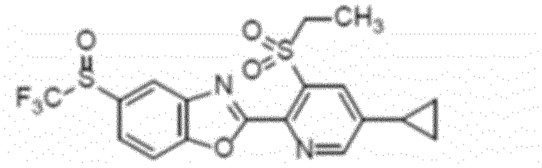 |
| Present compound B | 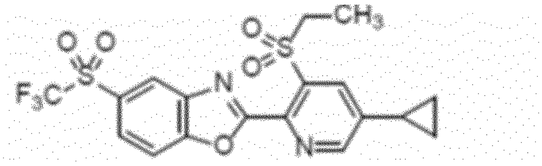 |
| Comparative compound 1 | 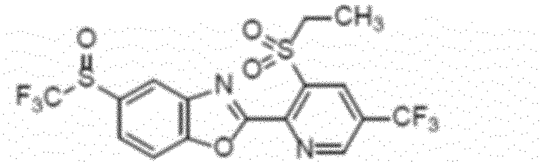 |
| Comparative compound 2 | 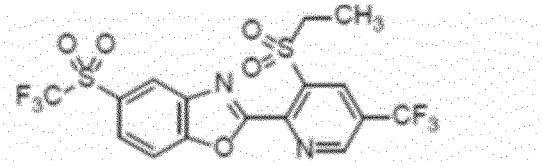 |
| Comparative compound 3 | 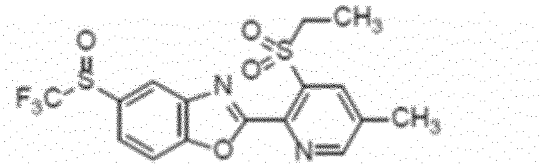 |
| Comparative compound 4 | 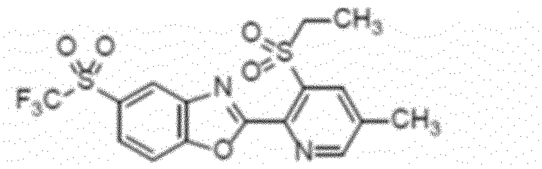 |

Fabrication of Aerosols

According to the method mentioned in Formulation Example 2, aerosols containing each compound listed in Table 2 were fabricated. The internal pressure of the container at 20°C of the aerosols thus fabricated was 0.5 MPa, the spray amount was 3 g/5 seconds, and the representative particle size (XR value) was 14 to 15 $\mu$m.

Test Example 1

In a plastic container (diameter: 12.4 cm, height: 10.2 cm), ten adult German cockroaches (Blattella germanica) (five males and five females each) were released, and the plastic container was placed in the center of the bottom of a cylindrical chamber of 17.2 cm in diameter. From the height of 50 cm, the aerosol containing each compound listed in Table 2 which was fabricated according to the method mentioned in Formulation Example 2 was sprayed with a spray time of 1.35 seconds and a spray amount of about 800 mg. After a lapse of one day from spraying, the number of dead and moribund individuals was examined, and moribund and mortal rates (%) were determined by the equation 1 below.

Dead individuals are completely immobile individuals, and moribund individuals are individuals who cannot get up when turned on their backs. The results are shown in Table 3.

(Equation 1)

Moribund and mortal rates (%) = {(number of dead individuals + number of moribund individuals)/number of tested individuals} × 100

[Table 3]

| Compound | Moribund and mortal rates (%) after one day |
|---|---|
| Present compound A | 100 |
| Present compound B | 100 |
| Comparative compound 1 | 30 |
| Comparative compound 2 | 30 |
| Comparative compound 3 | 30 |
| Comparative compound 4 | 15 |
| With no treatment | 0 |

Test Example 2

In a plastic container (diameter: 10 cm, height: 4.5 cm) lined with a filter paper (diameter: 8.2 cm), ten adult Argentine worker ants (Linepithema humile) were released, and the plastic container was placed in the center of the bottom of a cylindrical chamber of 17.2 cm in diameter. From the height of 60 cm, the aerosol containing each compound listed in Table 2 which was fabricated according to the method mentioned in Formulation Example 2 was sprayed with a spray time of 0.34 second or 0.68 second and a spray amount of about 400 mg or 200 mg. After a lapse of seven days from spraying, the number of dead and moribund individuals was examined, and moribund and mortal rates (%) were determined by the equation 2 below. Dead individuals are completely immobile individuals, and moribund individuals are individuals who cannot get up when turned on their backs. The results are shown in Table 4.

(Equation 2)

Moribund and mortal rates (%) = {(number of dead individuals + number of moribund individuals)/number of tested individuals} × 100

[Table 4]

| Compound | Spray amount (mg) - Moribund and mortal rates (%) after seven days | |
|---|---|---|
| | 400 | 200 |
| Present compound A | 100 | 100 |
| Present compound B | 100 | 100 |
| Comparative compound 1 | 100 | 10 |
| Comparative compound 2 | 100 | 13 |
| Comparative compound 3 | 100 | 3 |

(continued)

| Compound | Spray amount (mg) - Moribund and mortal rates (%) after seven days | |
|---|---|---|
| | 400 | 200 |
| Comparative compound 4 | 100 | 10 |
| With no treatment | 0 | 0 |

The results revealed that the present compounds A and B have excellent control effect against sanitary insect pests as compared with Comparative Compounds 1 to 4.

[Industrial Applicability]

The method of using an aerosol of the present invention is free from risk of contamination to the surroundings, and also has excellent efficacy and is suitable for control of sanitary insect pests.

## Claims

1. A sanitary insect pest control method, which comprises applying an aerosol comprising at least one compound selected from the group consisting of a compound represented by formula (I) :

[Chemical Formula 1]

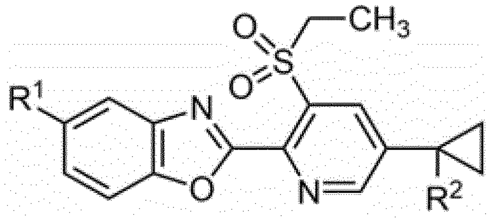

(I)

wherein $R^1$ represents a C1-C3 haloalkoxy group, a C1-C3 haloalkylthio group, a C1-C3 haloalkylsulfinyl group or a C1-C3 haloalkylsulfonyl group, and $R^2$ represents a hydrogen atom or a cyano group, an N-oxide thereof and a salt thereof, and a propellant to a sanitary insect pest, a place through which the sanitary insect pest can pass, or a place where the sanitary insect pest can inhabit.

2. The sanitary insect pest control method according to claim 1, wherein the aerosol is an aerosol containing a compound in which $R^1$ is a trifluoromethylsulfinyl group or a trifluoromethylsulfonyl group and $R^2$ is a hydrogen atom in formula (I).

3. The sanitary insect pest control method according to claim 1 or 2, wherein the aerosol is an aerosol containing a liquefied gas as the propellant.

4. The sanitary insect pest control method according to any one of claims 1 to 3, wherein the aerosol is an aerosol which further contains a hydrocarbon-based solvent.

5. The sanitary insect pest control method according to any one of claims 1 to 4, wherein the aerosol is an aerosol which further contains water.

6. The sanitary insect pest control method according to any one of claims 1 to 5, wherein the aerosol is an aerosol which further contains at least one insecticidal active ingredient.

7. The sanitary insect pest control method according to claim 6, wherein at least one insecticidal active ingredient mentioned above is at least one selected from the group consisting of allethrin, bioallethrin, bioresmethrin, dimefluthrin, empenthrin, epsilon-metofluthrin, epsilon-momfluorothrin, flumethrin, meperfluthrin, metofluthrin, momfluorothrin, prallethrin, profluthrin, resmethrin, tetramethrin, tetramethylfluthrin, transfluthrin, imiprothrin, heptafluthrin, permethrin, phenothrin, cyphenothrin, cypermethrin, cyfluthrin, etofenprox, deltamethrin, fenpropathrin, furamethrin,

pyrethrins, acetamiprid, clothianidin, dinotefuran, imidacloprid, thiamethoxam, thiacloprid, indoxacarb, broflanilide, fenitrothion, cyphenothrin, sulfoxaflor, pyriproxyfen, piperonyl butoxide and N-(2-ethylhexyl)-8,9,10-trinorborn-5-ene-2,3-dicarboxyimide.

**8.** The sanitary insect pest control method according to any one of claims 1 to 7, wherein the sanitary insect pest is at least one sanitary insect pest selected from the group consisting of the orders Blattodea, Hymenoptera, Diptera, Siphonaptera, Acari, Lepidoptera and Coleoptera.

**9.** An aerosol according to any one of claims 1 to 7.

**10.** The aerosol according to claim 9, which contains a liquefied petroleum gas as the propellant.

**11.** The aerosol according to claim 10, wherein the aerosol formulation is an aerosol containing the compound of formula (I) in an amount of 0.01 to 5 parts by weight, the liquefied petroleum gas in an amount of 30 to 90 parts by weight, and the hydrocarbon-based solvent in an amount of 20 to 70 parts by weight, per weight of the aerosol.

**12.** The aerosol according to any one of claims 9, 10 and 11, with which a pressure-resistant container is filled.

**13.** An aerosol product comprising an aerosol according to any one of claims 9, 10 and 11 and a pressure-resistant container filled with the aerosol.

## INTERNATIONAL SEARCH REPORT

International application No.
**PCT/JP2022/017996**

**A. CLASSIFICATION OF SUBJECT MATTER**

***A01N 47/02***(2006.01)i; ***A01M 1/20***(2006.01)i; ***A01N 25/06***(2006.01)i; ***A01P 7/04***(2006.01)i
FI: A01N47/02; A01P7/04; A01N25/06; A01M1/20 A

According to International Patent Classification (IPC) or to both national classification and IPC

**B. FIELDS SEARCHED**

Minimum documentation searched (classification system followed by classification symbols)

A01N47/02; A01M1/20; A01N25/06; A01P7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY/MARPAT (STN)

**C. DOCUMENTS CONSIDERED TO BE RELEVANT**

| Category* | Citation of document, with indication, where appropriate, of the relevant passages | Relevant to claim No. |
|---|---|---|
| Y | WO 2016/121997 A1 (NIHON NOHYAKU CO LTD) 04 August 2016 (2016-08-04) claims, paragraphs [0192]-[0209], [0216]-[0221], [0234]-[0239], examples 2, 3, formulation examples 1-4 | 1-13 |
| Y | JP 2014-5263 A (SUMITOMO CHEMICAL CO LTD) 16 January 2014 (2014-01-16) paragraphs [0272], [0274], [0277]-[0282], [0288], [0458], [0459] | 1-13 |
| Y | JP 2016-506360 A (SUMITOMO CHEMICAL CO LTD) 03 March 2016 (2016-03-03) paragraphs [0119], [0121], [0138], [0139], [0142], [0237], [0238] | 1-13 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 May 2022** | **07 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/017996**

| Patent document cited in search report | Publication date (day/month/year) | Patent family member(s) | Publication date (day/month/year) |
|---|---|---|---|
| WO 2016/121997 A1 | 04 August 2016 | US 2018/0002347 A1<br>claims, paragraphs [0119]-[0125]<br>EP 3252046 A1<br>KR 10-2017-0095909 A<br>CN 107207460 A | |
| JP 2014-5263 A | 16 January 2014 | US 2014/0194290 A1<br>paragraphs [1260], [1261], [1264], [1265], [1274], [1287], examples 8, 9<br>WO 2013/018928 A1<br>EP 2739624 A1<br>CN 103717598 A<br>KR 10-2014-0068920 A | |
| JP 2016-506360 A | 03 March 2016 | US 2015/0313234 A1<br>paragraphs [0337]-[0339], [0347], [0367], examples 8, 9<br>WO 2014/104407 A1<br>EP 2938601 A1<br>CN 104903303 A<br>KR 10-2015-0103061 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021071589 A
- JP 2021123405 A
- WO 2017146226 A
- WO 2020175491 A
- JP 2014005263 A
- JP 2016506360 A
- WO 2016121997 A
- WO 2020117487 A